# EUROPEAN PATENT APPLICATION

(11) **EP 3 521 730 A1**
(43) Date of publication of application: **07.08.2019**
(21) Application number: 17856066.0
(22) Date of filing: 25.09.2017
(51) Int. Cl.: F24V 30/00, C01B 3/00, C01B 4/00, F17C 11/00

(54) **HEAT GENERATING SYSTEM**

(30) Priority: 28.09.2016 JP 2016189963
(71) Applicant: Clean Planet Inc., Minato-ku Tokyo 105-0022 (JP)
(72) Inventor: IWAMURA Yasuhiro, Sendai-shi Miyagi 980-8577 (JP); ITO Takehiko, Tokyo 105-0022 (JP); KASAGI Jirota, Sendai-shi Miyagi 980-8577 (JP); YOSHINO Hideki, Tokyo 105-0022 (JP); HATTORI Masanao, Tokyo 105-0022 (JP)
(74) Representative: Bandpay & Greuter
(86) International application number: PCT/JP2017/034587
(87) International publication number: WO 2018/062115

(57) **Abstract**

There is proposed a heat generating system capable of generating heat more stably than conventionally possible, in a heat-generating element cell that generate the heat using a hydrogen storage metal or a hydrogen storage alloy. In a heat generating system 1 of the present invention, a filter 43 for removing impurities inhibiting the heat generation reaction in the hydrogen-based gas is provided with a circulation device 3. Thereby, in the heat generating system 1, the heat-generating element cell 2 that generates excess heat as a result of the heat generation reaction can increase and/or maintain the excess heat output by circulating the hydrogen-based gas while removing impurities inhibiting the heat generation reaction in the hydrogen-based gas, and thus, heat can be generated more stably than conventionally possible.

## Description

### Technical Field

The present invention relates to a heat generating system.

### Background Art

Recently, it has been announced that a heat generation reaction occurs when an inside of a container provided with heat-generating elements made of palladium (Pd) is supplied with deuterium gas and heated (for example, see Non Patent Literature 1 and Non Patent Literature 2).

Regarding such a heat generation phenomenon of generating excess heat (output enthalpy higher than input enthalpy) using a hydrogen storage metal such as palladium (Pd) or a hydrogen storage alloy such as palladium alloy, the detailed mechanism of generating excess heat has been discussed among researchers of each country. For example, it is also reported in Non Patent Literatures 3 to 6 and Patent Literature 1 that a heat generation phenomenon has occurred, and it can be said the heat generation phenomenon is an actually occurring physical phenomenon. Since such a heat generation phenomenon causes excess heat generation, the excess heat can be used as an effective heat source if the heat generation phenomenon can be controlled.

### Citation List

### Patent Literature

Patent Literature 1: U.S. Patent No. 9,182,365 Non Patent Literature
Non Patent Literature 1: A. Kitamura, et al., "Anomalous effects in charging of Pd powders with high density hydrogen isotopes", Physics Letters A 373 (2009) 3109 - 3112
Non Patent Literature 2: A. Kitamura, et al., "Brief summary of latest experimental results with a mass-flow calorimetry system for anomalous heat effect of nano-composite metals under D(H)-gas charging" CURRENT SCIENCE, VOL. 108, NO. 4, p. 589 - 593, 2015
Non Patent Literature 3: Y. Iwamura, T. Itoh, N. Gotoh and I. Toyoda, Fusion Technology, Vol. 33, p. 476 - 492, 1998.
Non Patent Literature 4: I. Dardik, et al., "Ultrasonically-excited electrolysis Experiments at Energetics Technologies", ICCF-14 International Conference on Condensed Matter Nuclear Science. 2008. Washington, DC.
Non Patent Literature 5: Y. ARATA and Yue-Chang ZHANG,"Anomalous Difference between Reaction Energies Generated within D2O-Cell and H2O-Cell", Jpn. J. Appl. Phys. Vol. 37 (1998) pp. L 1274 - L 1276
Non Patent Literature 6: F. Celani et al., "Improved understanding of self-sustained, sub-micrometric multicomposition surface Constantan wires interacting with H2 at high temperatures: experimental evidence of Anomalous Heat Effects", Chemistry and Materials Research, Vol. 3 No. 12 (2013) 21

### Summary of Invention

### Technical Problem

In a heat-generating element cell using technologies disclosed Non Patent Literatures 1 to 6 in which heat is generated using a hydrogen storage metal or a hydrogen storage alloy, sometimes the occurrence probability of heat generation phenomenon is low. Even if the heat-generating element cell generates excess heat once, a phenomenon may occur in which the excess heat is suddenly reduced by some cause. These cause a problem in that the expected heat cannot be necessarily stably obtained.

The present invention has been made in view of the above problem, and an object of the present invention is to propose a heat generating system capable of generating heat more stably than conventionally possible, in the above-described unstable heat-generating element cell that generate the heat using a hydrogen storage metal or a hydrogen storage alloy.

### Solution to Problem

To solve the above-described problem, a heat generating system includes a heat-generating element cell and a circulation device. The heat-generating element cell includes a container and a reactant. The container has a recovery port and a discharge port. The reactant is provided in the container. The reactant is made from a hydrogen storage metal or a hydrogen storage alloy. The reactant has a plurality of metal nanoparticles provided on a surface of the reactant. The heat-generating element cell generates excess heat when hydrogen-based gas contributing to heat generation is supplied into the container and hydrogen atoms are occluded in the plurality of metal nanoparticles. The circulation device is configured to circulate the hydrogen-based gas in the heat-generating element cell. The circulation device includes a circulating passage, a pump, and a filter. The circulating passage is provided outside the container. The circulating passage connects the recovery port to the discharge port. The pump is configured to circulate the hydrogen-based gas in the container via the circulating passage. The filter is provided on the circulating passage. The filter is configured to adsorb and remove the impurities in the hydrogen-based gas.

### Advantageous Effects of Invention

According to the present invention, a heat-generating element cell that generates excess heat as a result of the heat generation reaction can increase and/or maintain the excess heat output by circulating the hydrogen-based gas while removing impurities in the hydrogen-based gas, and thus, heat can be generated more stably than conventionally possible.

### Brief Description of Drawings

FIG. 1 is a schematic diagram illustrating an entire configuration of a heat generating system of a first embodiment;
FIG. 2 is a graph showing transition of excess heat when deuterium gas is used;
FIG. 3 is graph showing a temperature change in an outer wall of a container of a heat-generating element cell when the deuterium gas is used;
FIG. 4 is a graph showing transition of the excess heat when natural hydrogen gas is used;
FIG. 5 is a graph showing a temperature change in the outer wall of the container of the heat-generating element cell when the natural hydrogen gas is used;
FIG. 6 is a graph showing transition of a deuterium-passing amount, a deuterium gas pressure, and a sample temperature;
FIG. 7 is a schematic diagram illustrating an entire configuration of a heat generating system of a second embodiment;
FIG. 8 is a perspective view illustrating a nozzle unit;
FIG. 9 is a side view illustrating a state in which the nozzle unit is arranged below a reactant;
FIG. 10 is a side view illustrating a state in which the nozzle units are arranged on both sides of the reactant;
FIG. 11 is a side view illustrating a state in which a plurality of nozzle units are arranged on both sides of the reactant; and
FIG. 12 is a schematic diagram illustrating an entire configuration of a heat generating system of a third embodiment.

### Description of Embodiments

### [First Embodiment]

A first embodiment of the present invention will be described in detail based on the following drawings.

### (1) Entire Configuration of Heat Generating System of the Present Invention

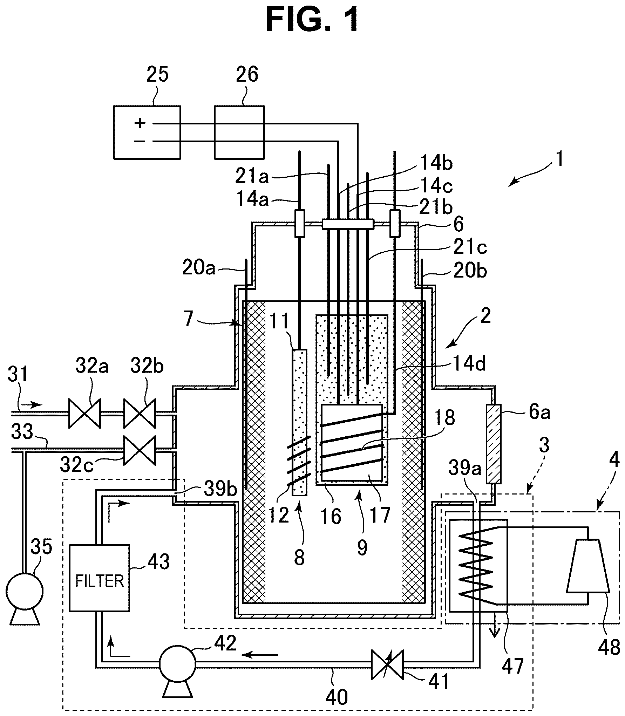

As illustrated in FIG. 1, a heat generating system 1 of the present invention includes a heat-generating element cell 2 in which hydrogen-based gas contributing to heat generation is supplied into a container 6, a circulation device 3 that circulates the hydrogen-based gas in the heat-generating element cell 2, and a heat recovery device 4 that recovers the heat from the hydrogen-based gas heated by excess heat output from the heat-generating element cell 2. The heat-generating element cell 2 has the container 6 in which a hydrogen storage metal such as Pd, Ni, Pt, and Ti, or a hydrogen storage alloy containing at least one of these elements is provided. When an interior of the container 6 is supplied with hydrogen-based gas and heated, the heat generation reaction occurs, thereby generating excess heat. Deuterium gas and/or natural hydrogen gas can be applied as the hydrogen-based gas to be supplied to the heat-generating element cell 2. Note that the natural hydrogen gas refers to hydrogen-based gas containing at least 99.985% of protium gas.

Specifically, the heat-generating element cell 2 used for the heat generating system 1 is a heat-generating element cell using technologies which are disclosed in Non Patent Literature 1, Non Patent Literature 2, Non Patent Literature 6, and International Publication No. WO2015/008859. An internal structure which is disclosed in Not Patent Literatures 1, 2, 6 and International Publication No. 2015/008859 can be used.

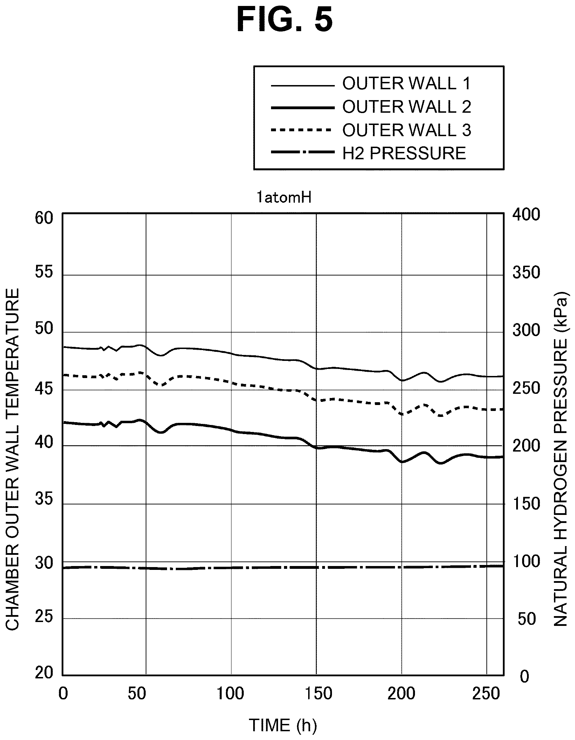

Note that the present embodiment describes a case in which a heat-generating element cell using the structure disclosed in International Publication No. WO 2015/008859 (FIG. 5) is used as the heat-generating element cell 2 that generates excess heat using the hydrogen storage metal or the hydrogen storage alloy when the hydrogen-based gas contributing to the heat generation is supplied into the container 6, but the present invention is not limited thereto. If excess heat can be generated using the hydrogen storage metal or the hydrogen storage alloy when the hydrogen-based gas contributing to the heat generation is supplied into the container, any configuration disclosed in Non Patent Literatures 1, 2, 6 and the other various Non Patent Literatures and Patent Literatures may be used as the heat-generating element cell.

### (2) Heat-generating element cell

The heat-generating element cell 2 includes the container 6, and a reactant that is provided in the container 6, is made from a hydrogen storage metal or a hydrogen storage alloy, and has a plurality of metal nanoparticles provided on the surface of the reactant. Hydrogen atoms are occluded in the metal nanoparticles to generate excess heat when hydrogen-based gas contributing to heat generation is supplied into the container 6. In the heat-generating element cell 2 according to the present embodiment, during the heat generation reaction, the interior of the container 6 is heated by a heater 17 without generating plasma in the container 6, the deuterium gas is supplied into the heated container 6, and thereby excess heat equal to or higher than the heating temperature can be generated. The container 6 is formed from, for example, stainless steel (SUS306 or SUS316) or the like, and has a cylindrical space therein to form an enclosed space. Note that reference numeral 6a denotes a window unit which is formed of transparent member such as Kovar-glass, and is structured so that the operator can directly visually recognize the state in the container 6 while maintaining the sealed state in the container 6.

The container 6 is provided with a hydrogen-based gas supply passage 31. After the hydrogen-based gas is supplied from the hydrogen-based gas supply passage 31 through regulating valves 32a, 32b, the supply of the hydrogen-based gas is stopped, so that a predetermined amount of hydrogen-based gas can be stored in the container 6. Note that reference numeral 35 denotes a dry pump, and the gas in the container 6 is discharged to the exterior of the container 6 through an exhaust passage 33 and a regulating valve 32c as necessary, so that the gas can be evacuated and the pressure can be regulated.

The container 6 has a structure in which the reactant 7 is arranged so as to come in contact with an inner wall surface forming the cylindrical space. The whole of the container 6 is set at the ground potential, and the reactant 7 contacting the inner wall of the container 6 is also set at the ground potential. The reactant 7 has a reticulated shape formed of a thin wire which is made from a hydrogen storage metal such as Pd, Ni, Pt, and Ti or a hydrogen storage alloy containing at least one of these elements, and is formed in a cylindrical shape in conformance with the cylindrical space of the container 6. The reactant 7 has a plurality of metal nanoparticles (not illustrated) having a nano-size with a width of 1000 [nm] or smaller provided on the surface of the thin wire, and the surface oxide layer is removed so that the surface metal nanoparticles becomes an activated state.

Wound type reactants 8, 9 each serving as an electrode are provided in a space surrounded by the reactant 7. The wound type reactants 8, 9 serve as an anode and a cathode, so that in the plasma treatment as the pretreatment, the wound type reactants 8, 9 can cause the glow discharge to generate the plasma in the container 6. In the heat-generating element cell 2, for example, one wound type reactant 8 serves as an anode, and the reactant 7 is set at the ground potential to generate the plasma for a predetermined time period, and then the other wound type reactant 9 serves as a cathode, and the reactant 7 is set as the ground potential to generate the plasma for a predetermined time period. These processes are repeated a predetermined number of times as the plasma treatment. Thereby, in the heat-generating element cell 2, a plurality of metal nanoparticles having a nano-size can be formed on each surface of the reactant 7 and the wound type reactants 8, 9.

One wound type reactant 8 has a rod-shaped electrode unit 11 which is connected to an external power source (not illustrated) through a wire 14a, so that a predetermined voltage from the power source can be applied to the electrode unit 11. The wound type reactant 8 has, for example, a structure in which a thin wire 12 being made from a hydrogen storage metal such as Pd, Ni, Pt, and Ti, or a hydrogen storage alloy is spirally wound around the electrode unit 11 which is formed of a conducting member of Al₂O₃ (alumina ceramics) or the like, and a plurality of metal nanoparticles having the nano-size are formed on the surface of the thin wire 12 by the plasma treatment.

The other wound type reactant 9 has a plate-shaped electrode unit 16 which is connected to an external power source (not illustrated) through a wire 14d, so that a predetermined voltage from the power source can be applied to the electrode unit 16. The electrode unit 16 is formed of a conducting member of Al₂O₃ (alumina ceramics) or the like, and a heater 17 is provided on the surface of the electrode unit 16. The heater 17 is connected to an external heating power source 25 through wires 14b, 14c so that the wound type reactant 9 can be heated at a predetermined temperature.

The heater 17 is, for example, a ceramic heater, and a thin wire 18 made from a hydrogen storage metal such as Pd, Ni, Pt, and Ti, or a hydrogen storage alloy is spirally wound around the heater 17. A plurality of metal nanoparticles having the nano-size are also formed on the surface of the thin wire 18 by the above-described plasma treatment. Note that reference numeral 26 denotes a current voltmeter which is provided on the wires 14b, 14c, to measure a current and a voltage which are applied to the heater 17 when the heater 17 is heated. Note that the wound type reactant 9 may have a structure in which the thin wire 18 is wound around a set of the electrode unit 16 and the heater 17.

A plurality of temperature measurement units 20a, 20b, 21a, 21b, 21c are provided at predetermined positions in the container 6 so that the temperatures at the respective portions can be measured. In the present embodiment, the temperature measurement units 20a, 20b are provided along the inner wall of the container 6, to measure the temperature of the inner wall. The other temperature measurement units 21a, 21b, 21c are provided in the electrode unit 16 of the wound type reactant 9, to measure the temperature within the electrode unit 16. Note that the temperature measurement units 21a, 21b, 21c have different lengths, to measure the temperature at each portion of a lower portion, a middle portion and an upper portion in the electrode unit 16, for example.

In the heat-generating element cell 2, a plurality of metal nanoparticles having the nano-size can be formed on the surfaces of the wound type reactants 8, 9 and the reactant 7 by the plasma treatment, subsequently the wound type reactants 8, 9 and the reactant 7 are heated by a heater 17 not illustrated, and the deuterium gas is supplied into the container 6 which is kept at the vacuum state. Thereby, in the heat-generating element cell 2, the hydrogen atoms are occluded in the metal nanoparticles on the surfaces of the wound type reactants 8, 9 and the reactant 7, and thereby excess heat equal to or higher than the heating temperature of the heater 17 can be generated in the container 6. Here, the heating temperature at which the wound type reactants 8, 9 and the reactant 7 are heated by the heater 17 is desirably 200 [°C] or higher, and further preferably is 250 [°C] or higher.

### (3) Circulation Device

Next, the circulation device 3 will be described. The circulation device 3 includes a circulating passage 40 communicating a recovery port 39a that is provided at a predetermined position in the container 6 with a discharge port 39b that is provided at a position different from the recovery port 39a in the container 6, so that the hydrogen-based gas in the container 6 of the heat-generating element cell 2 can circulate through the circulating passage 40. That is, the circulating passage 40 is provided outside the container 6, and connects from the recovery port 39a of the container 6 to the discharge port 39b of the container 6. The circulating passage 40 is provided with a flow rate control unit 41 that controls the circulation flow rate of the hydrogen-based gas, a pump 42 that circulates the hydrogen-based gas, and a filter 43 that removes impurities in the hydrogen-based gas.

The pump 42 is, for example, a metal bellows pump, and is configured to draw the hydrogen-based gas in the container 6 of the heat-generating element cell 2 into the circulating passage 40 and return the gas to the container 6 again through the circulating passage 40. The filter 43 adsorbs water (steam) and hydrocarbon, as well as reaction products such as C, S, and Si without adsorbing inert gas such as hydrogen gas, so that impurities in the hydrogen-based gas can be removed. That is, the filter 43 is provided along the way of the circulating passage 40, and adsorbs and removes impurities in the hydrogen-based gas. The circulation device 3 can supply the fresh hydrogen-based gas into the container 6, the fresh hydrogen-based gas being obtained by removing impurities through the filter 43. Thereby, in the heat-generating element cell 2, the circulation device 3 always continues supply of the hydrogen-based gas from which impurities have been removed, the impurities inhibiting induction and maintenance of the heat generation reaction, thereby continuously maintaining the state in which the excess heat output is easily induced, and further increasing and/or maintaining the excess heat output after the excess heat is output. Note that it has been confirmed by a verification test described below that when impurities are continuously removed from the hydrogen-based gas to be supplied to the heat-generating element cell 2, the excess heat in the heat-generating element cell 2 is gradually increased.

The flow rate control unit 41 is, for example, a regulating valve, and is configured to control a circulation flow rate of the hydrogen-based gas when the hydrogen-based gas is returned to the container 6 again through the circulating passage 40 from the container 6. In the present embodiment, the flow rate control unit 41 can control the circulation flow rate of the hydrogen-based gas in accordance with the temperatures measured by the temperature measurement units 20a, 20b, 21a, 21b, 21c that are provided in the heat-generating element cell 2. For example, the flow rate control unit 41 increases the circulation flow rate of the hydrogen-based gas when the temperatures measured by the temperature measurement units 20a, 20b, 21a, 21b, 21c are lowered, so that an amount of the hydrogen-based gas flowing through the filter 43 can be increased. Thereby, the circulation device 3 can increase an amount of the hydrogen-based gas in the heat-generating element cell 2, the hydrogen-based gas being obtained by removing impurities inhibiting the heat generation reaction. Correspondingly, the circulation device 3 can help the heat-generating element cell 2 to output the excess heat.

The flow rate control unit 41 can control an inflow amount of hydrogen-based gas into the container 6, the hydrogen-based gas having a temperature which is lowered when flowing through the circulating passage 40, whereby the temperature within the container 6 can be adjusted using the hydrogen-based gas. For example, when the flow rate control unit 41 increases the circulation flow rate of the hydrogen-based gas, more hydrogen-based gas which is cooled can be supplied into the container 6, thereby promoting lowering of temperature within the container 6. On the other hand, when the flow rate control unit 41 decreases the circulation flow rate of the hydrogen-based gas, an amount of the cooled hydrogen-based gas to be supplied into the container 6 can be decreased, thereby suppressing lowering of temperature within the container 6. In particular, in the present embodiment, the heat recovery device 4 (described later) that recovers the heat from the hydrogen-based gas is provided to the circulating passage 40, and therefore the temperature of the hydrogen-based gas is lowered when the hydrogen-based gas flows through the circulating passage 40. Accordingly, the flow rate control unit 41 controls the flow rate of the hydrogen-based gas so that the temperature within the container 6 can be adjusted.

In the present embodiment, the circulation device 3 is provided with the recovery port 39a and the discharge port 39b which are provided in respective side walls facing each other in the container 6, and the reactant 7 and the wound type reactants 8, 9 are arranged in an area between the recovery port 39a and the discharge port 39b in the container 6. Thereby, in the heat-generating element cell 2, when the hydrogen-based gas from which impurities inhibiting the heat generation reaction have been removed is discharged from the discharge port 39b, the hydrogen-based gas flows through the reactant 7 and then in the area in which the wound type reactants 8, 9 are arranged, to thereby form the flow of the hydrogen-based gas toward the recovery port 39a again. As a result, the hydrogen-based gas from which impurities inhibiting the heat generation reaction have been removed can be reliably supplied to areas around the reactant 7 and the wound type reactants 8, 9.

### (4) Heat Recovery Device

The heat recovery device 4 is provided to the circulating passage 40 of the circulation device 3, so that the heat can be recovered from the hydrogen-based gas flowing through the circulating passage 40. In the present embodiment, the heat recovery device 4 is provided to the circulating passage 40 on the upstream side of the flow rate control unit 41, the pump 42, and the filter 43 that are provided in the circulation device 3, to recover the heat from the hydrogen-based gas immediately after the hydrogen-based gas is introduced from the recovery port 39a of the container 6 into the circulating passage 40. Thereby, the heat recovery device 4 can recover more heat from the hydrogen-based gas before the temperature of the hydrogen-based gas is lowered by the circulation device 3.

The heat recovery device 4 includes a heat exchanger 47 that is arranged along the circulating passage 40, and an energy exchanger 48 that converts the heat recovered by the heat exchanger 47 into energy. The heat exchanger 47 has a pipe arranged to move along the circulating passage 40, and heat absorption fluid flows through the pipe. When the heat absorption fluid flows through the pipe moving along the circulating passage 40, the heat absorption fluid takes heat from the hydrogen-based gas flowing through the circulating passage 40 and is thus heated. The energy exchanger 48 is, for example, a turbine, a thermoelectric element, or a stirling engine, and can generate energy from the heated heat absorption fluid.

### (5) Verification Test Using Deuterium Gas

Next, the heat generating system including the heat-generating element cell 2 and the circulation device 3 illustrated in FIG. 1 was fabricated to perform the verification test for examining generation of the excess heat in the heat-generating element cell 2. In this verification test, a cylindrical reactant 7 being formed from Ni in a reticulated shape, a wound type reactant 8 in which the electrode unit 11 being formed from Pd was spirally wound around the thin wire 12 being formed from Pd, and a wound type reactant 9 in which a ceramic heater (heater 17) around which the thin wire 18 being formed from the same Pd is wound is provided to the electrode unit 16 being formed from Pd were prepared, and these reactants were installed in the stainless steel container 6 as illustrated in FIG. 1.

Deuterium gas was used as hydrogen-based gas contributing to heat generation in the heat-generating element cell 2. For example, thermocouples manufactured by OMEGA Engineering Inc. (trade name: k type sheath thermocouple) were used as the temperature measurement units 20a, 20b, 21a, 21b, 21c. Furthermore, in this verification test, three thermocouples were further on the outer wall of the container 6 of the heat-generating element cell 2. Specifically, a first thermocouple was provided on a side surface of the outer wall at a position below a top surface of the container 6 by around one third the wall height, a second thermocouple was provided on the side surface of the outer wall at a position below the top surface of the container 6 by around two third the wall height, and a third thermocouple was provided on the outer wall at a center portion of the container 6(position below the top surface of the container 6 by around half the wall height).

Note that in the heat-generating element cell 2, one wound type reactant 8 was set as an anode, and the plasma treatment was performed in which a voltage of 600 to 1000 [V] was applied for 600 seconds to 100 hours in the container 6 being an enclosed space in which gas was evacuated to set a pressure in the container 6 at 10 to 500 [Pa] to cause the glow discharge. Next, the other wound type reactant 9 was set as a cathode, and the plasma treatment was performed in which the glow discharge was caused as in the above. Thereby, the oxide layer was removed from each surface of the surface of the thin wire 12 on the wound type reactant 8, the surface of the thin wire 18 on the wound type reactant 9, and the surface of the reactant 7, and a plurality of metal nanoparticles having the nano-size with a particle diameter of 1000 [nm] or smaller were formed.

Note that in another verification test, after the plasma treatment, the wound type reactants 8, 9 and the reactant 7 were observed with an SEM for checking whether the metal nanoparticles were formed. As a result, it was confirmed that the metal nanoparticles of 1000 [nm] or smaller were formed on the wound type reactants 8, 9 and the reactant 7.

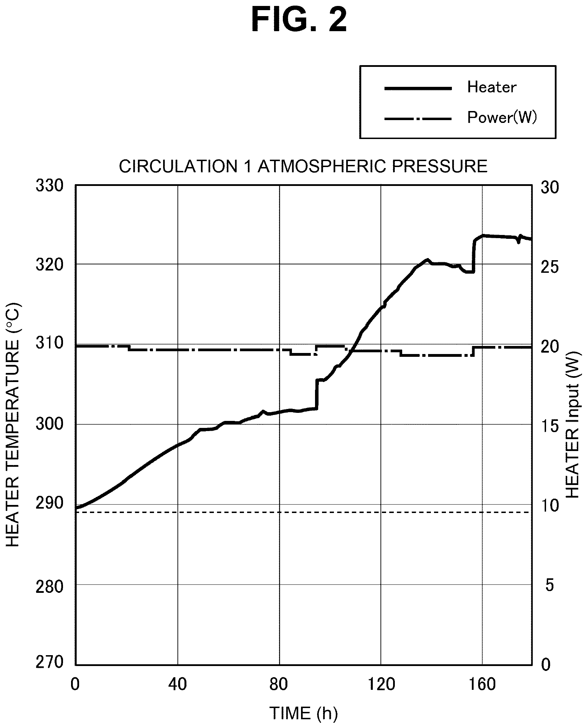

For example, a filter manufactured by Nippon Sanso Corporation (trade name: purifilter) was used as the filter 43. In this verification test, after the plasma treatment was performed in the heat-generating element cell 2, the heater 17 continued to be heated at the input heating wattage of about 20 [W] so that the temperature within the container 6 could be a predetermined temperature. Deuterium gas filled in the container 6 was circulated at a certain flow rate up to the maximum flow rate of 2.8 [L/min] by the circulation device 3. At this time, it was checked with the temperature measurement unit 21a provided at a center in the container 6 whether the excess heat was generated in the heat-generating element cell 2, and a result shown in FIG. 2 was obtained. As shown in FIG. 2, the interior of the container 6 is heated by a heater 17, and the initial temperature when the deuterium gas was introduced into the container 6 was about 290 [°C] .

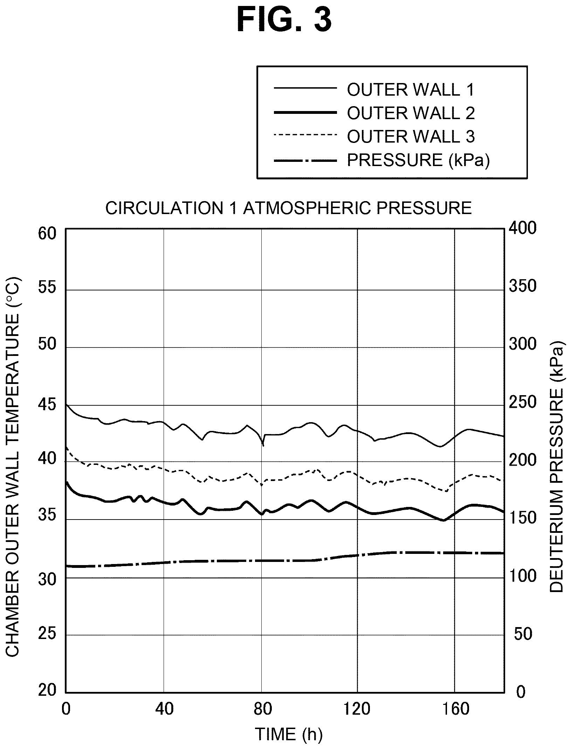

Then, the temperature within the container 6 was measured when the circulation device 3 continued circulation of the deuterium gas in the container 6 through the filter 43. As a result, as shown in FIG. 2, it could be confirmed that the temperature within the container 6 was gradually increased. At this time, the outer wall temperatures of the container 6 were measured with the above-described three thermocouples which were provided on the outer wall of the container 6 of the heat-generating element cell 2, and a result shown in FIG. 3 was obtained. Note that FIG. 3 also shows the result of the examination of the deuterium gas pressure in the container 6.

From FIG. 3, it could not be confirmed that the three thermocouples showed large temperature rise of the outer wall of the container 6. From this, it could be confirmed that the temperature rise shown in FIG. 2 was caused not by external heating in the outer wall of the container 6 but by generation of the excess heat equal to or higher than the heating temperature around the wound type reactant 9 provided with the temperature measurement unit 21a in the container 6. From the verification test, it could been also confirmed that in the heat generating system 1, the interior of the container 6 of the heat-generating element cell 2 could be held for a long time in a high pressure state in which the heat generation reaction easily occurs, even when deuterium gas (hydrogen-based gas) was continuously circulated while removing impurities in the deuterium gas (hydrogen-based gas) by the circulation device 3.

### (6) Operation and Effect

In the above configuration, the heat generating system 1 is provided with the heat-generating element cell 2 that generates excess heat using the hydrogen storage metal or the hydrogen storage alloy when the hydrogen-based gas contributing to the heat generation is supplied into the container 6, and the circulation device 3 that circulates the hydrogen-based gas in the heat-generating element cell 2. The circulation device 3 is provided with the filter 43 through which impurities inhibiting the heat generation reaction in the hydrogen-based gas are removed. Thereby, in the heat generating system 1, the heat-generating element cell 2 that generates excess heat as a result of the heat generation reaction can increase and/or maintain the excess heat output by circulating the hydrogen-based gas while removing impurities inhibiting the heat generation reaction from the hydrogen-based gas, and thus, heat can be generated more stably than conventionally possible.

In the heat generating system 1, the circulation device 3 can always continue supply of the hydrogen-based gas from which impurities have been removed in a state in which a predetermined amount of the hydrogen-based gas is stored in the container 6 of the heat-generating element cell 2, and therefore the consumption of the hydrogen-based gas can be remarkably reduced compared to a system that always supplies new hydrogen-based gas into the container 6 and continues discharge of excess hydrogen-based gas from the container 6 to continuously consume the hydrogen-based gas, for example.

Furthermore, in the heat generating system 1 according to the present invention, the interior of the container 6 being an enclosed space is held in a high pressure state in which the heat generation reaction easily occurs, and a predetermined amount of the hydrogen-based gas is continuously circulated, whereby an amount of the hydrogen-based gas to be used can be kept to a predetermined amount. Correspondingly, the cost can be reduced.

In this heat generating system 1, the flow rate control unit 41 can control an inflow amount of the hydrogen-based gas from which impurities have been removed into the container 6, and an inflow amount of the hydrogen-based gas which is cooled through the circulating passage 40 into the container 6. Thereby, the heat generating system 1 can control the excess heat output in the heat-generating element cell 2 based on the inflow amount of the hydrogen-based gas from which impurities have been removed, and further adjust the temperature within the container 6 based on the inflow amount of the cooled hydrogen-based gas into the container 6. That is, the flow rate control unit 41 controls the circulation flow rate of the hydrogen-based gas in accordance with the temperatures measured by the temperature measurement units 20a, 20b, 21a, 21b, 21c, and thereby controls the excess heat output and adjusts the temperature within the container 6.

### (7) Verification Test Using Natural Hydrogen Gas

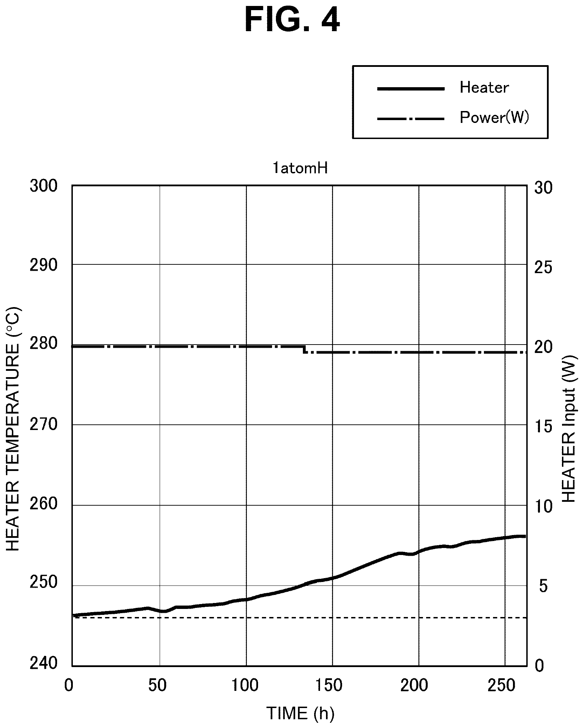

Next, a verification test similar to the above-described "(5) Verification Test Using Deuterium Gas" was performed using natural hydrogen gas. Here, high purity hydrogen (99.999% Grade 2) was used as the natural hydrogen gas. In the verification test using natural hydrogen gas, the plasma treatment was performed in the heat-generating element cell 2 under conditions similar to those of the above-described verification test, and then the natural hydrogen gas filled in the container 6 was circulated at a certain flow rate up to the maximum flow rate of 2.8 [L/min] by the circulation device 3 while heating with the heater 17. At this time, it was checked with the temperature measurement unit 21a provided at a center in the container 6 whether the excess heat was generated in the heat-generating element cell 2, and a result shown in FIG. 4 was obtained. As shown in FIG. 4, the interior of the container 6 is heated by the heater 17, and the initial temperature when the natural hydrogen gas was introduced into the container 6 was about 246 [°C].

Then, the temperature within the container 6 was measured when the circulation device 3 continued circulation of the natural hydrogen gas in the container 6 through the filter 43. As a result, as shown in FIG. 4, it could be confirmed that the temperature within the container 6 was gradually increased, even when natural hydrogen gas was used. At this time, the outer wall temperatures of the container 6 were measured with the above-described three thermocouples which were provided on the outer wall of the container 6 of the heat-generating element cell 2, and a result shown in FIG. 5 was obtained. Note that FIG. 5 also shows the result of the examination of the natural hydrogen gas pressure in the container 6.

From FIG. 5, it could not be confirmed that the three thermocouples showed large temperature rise of the outer wall of the container 6. From this, it could be confirmed that the temperature rise shown in FIG. 5 was caused not by external heating in the outer wall of the container 6 but by generation of the excess heat equal to or higher than the heating temperature around the wound type reactant 9 provided with the temperature measurement unit 21a in the container 6. From the verification test, it could been also confirmed that in the heat generating system 1, the interior of the container 6 of the heat-generating element cell 2 could be held for a long time in a high pressure state in which the heat generation reaction easily occurs, even when natural hydrogen gas (hydrogen-based gas) was continuously circulated while removing impurities in the natural hydrogen gas (hydrogen-based gas) by the circulation device 3.

### (8) Verification Experiment of Impurity Removal Effect of Filter

A verification experiment was performed for verifying the impurity removal effect of the filter 43. The verification experiment was performed using an experiment device (not illustrated) for measuring an amount of hydrogen passing through a hydrogen-permeable membrane (not illustrated) (hereinafter referred to as a "hydrogen-passing amount"). The impurity removal effect of the filter 43 was estimated using the hydrogen-passing amount measured by the experiment device.

The experiment device has a first chamber and a second chamber which are arranged with the hydrogen-permeable membrane interposed therebetween. The hydrogen-based gas is supplied into the first chamber, and the interior of the second chamber is evacuated. Thereby, in the experiment device, the pressure in the first chamber becomes higher than the pressure in the second chamber, which causes a pressure differential between both chambers. That is, the pressure differential arises between both sides of the hydrogen-permeable membrane. Hydrogen molecules contained in the hydrogen-based gas are adsorbed on a surface on a highpressure side of the hydrogen-permeable membrane, and the hydrogen molecules each are dissociated into two hydrogen atoms. The dissociated hydrogen atoms diffuse in and pass through the hydrogen-permeable membrane. The hydrogen atoms which have passed through the hydrogen-permeable membrane are rejoined on a surface on a low-pressure side of the hydrogen-permeable membrane to be hydrogen molecules, and then discharged. Thereby, hydrogen contained in the hydrogen-based gas passes through the hydrogen-permeable membrane.

Here, the hydrogen-passing amount is determined by a temperature of the hydrogen-permeable membrane, a pressure differential between both sides of the hydrogen-permeable membrane, and a surface state of the hydrogen-permeable membrane. When impurities are contained in the hydrogen-based gas, the impurities are attached to the surface of the hydrogen-permeable membrane, whereby the surface state of the hydrogen-permeable membrane may be degraded. Attachment of impurities to the surface of the hydrogen-permeable membrane inhibits adsorption and dissociation of hydrogen molecules on and from the surface of the hydrogen-permeable membrane, thereby reducing the hydrogen-passing amount. In the verification experiment, the hydrogen-passing amount was measured in a state in which the temperature of the hydrogen-permeable membrane and the pressure differential between both sides of the hydrogen-permeable membrane were maintained to be constant, and the impurity removal effect of the filter 43 was evaluated.

The experiment device will be specifically described. The experiment device includes a supply passage that supplies the hydrogen-based gas into the first chamber, a circulating passage through which the hydrogen-based gas in the first chamber is circulated, and an evacuation unit that evacuates the interior of the second chamber, in addition to the hydrogen-permeable membrane, the first chamber, and the second chamber. The experiment device is electrically connected with a computer (not illustrated) to input and output various types of data to and from the computer.

A connection portion which connects the first chamber and the second chamber is provided between the first chamber and the second chamber. The connection portion has an opening for communicating the interior of the first chamber with the interior of the second chamber. The hydrogen-permeable membrane is attached to this opening to separate the interior of the first chamber and the interior of the second chamber. The connection portion is provided with a temperature control unit for controlling a temperature of the hydrogen-permeable membrane. The temperature control unit detects the temperature of the hydrogen-permeable membrane, and heats the hydrogen-permeable membrane based on the detected temperature. The data of the temperature detected by the temperature control unit is output to the computer.

The first chamber includes the supply port connecting with the supply passage, the recovery port connecting with one end of the circulating passage, and the discharge port connecting with the other end of the circulating passage, and a pressure gauge for detecting a pressure within the first chamber. The data of the pressure detected by the pressure gauge is output to the computer.

The supply passage is provided with a storage tank for storing the hydrogen-based gas, and a regulating valve for controlling the flow rate of the hydrogen-based gas. The hydrogen-based gas is supplied into the first chamber from the storage tank through the supply port.

The circulating passage is provided with a vacuum valve, a circulation pump, and the filter 43. The vacuum valve is adapted to control the flow rate of the hydrogen-based gas to flow out to the circulating passage from the first chamber through the recovery port. A valuable leak valve was used as the vacuum valve. The circulation pump is adapted to circulate the hydrogen-based gas between the first chamber and the circulating passage. A metal bellows pump was used as the circulation pump. The filter 43 is similar to that described in the above-described embodiment. That is, the filter 43 adsorbs and removes impurities together with the hydrogen-based gas which has been discharged from the interior of the first chamber. Thereby, the hydrogen-based gas from which the impurities have been removed is returned to the interior of the first chamber from the discharge port.

The second chamber includes a discharge port connecting with the evacuation unit, a vacuum gauge for detecting the pressure within the second chamber. The data of the pressure detected by the vacuum gauge is output to the computer.

The evacuation unit evacuates the interior of the second chamber at a constant discharge speed. The pressure within the second chamber is maintained to be constant by the evacuation unit. The evaluation unit has, for example, a configuration in which a turbo molecular pump (TMP) and a dry pump (DP) are combined.

The verification experiment using the above-described experiment device will be described. The purifilter was used as the filter 43. A Pd plate manufactured by TANAKA Holdings Co., Ltd. (25 mm × 25 mm × 0.1 mm, Purity 99.9%) was used as a sample of the hydrogen-permeable membrane. Deuterium gas was used as the hydrogen-based gas. In the verification experiment, the deuterium gas was supplied into the first chamber at the known flow rate in advance, and the vacuum gauge was calibrated. The verification experiment was started after the vacuum gauge was calibrated.

In the verification experiment, the sample was heated, and the temperature of the sample (hereinafter referred to as a "sample temperature") was maintained at 70 [°C]. The sample temperature is controlled by the temperature control unit. Then, the deuterium gas was supplied into the first chamber, and the pressure within the first chamber (hereinafter referred to as a "deuterium gas pressure") was set to 130 [kPa]. The deuterium gas pressure was obtained from the pressure gauge. The second chamber was evacuated at a constant discharge speed by the turbo molecular pump. The ultimate vacuum degree was set to 10⁻⁴ [Pa] or less, which caused a pressure differential between both sides of the sample, such that the deuterium gas started to pass through the sample. When the deuterium gas passed through the sample, the pressure within the second chamber was 0.01 [Pa] or less. The deuterium-passing amount was calculated using a measured value of the vacuum gauge. After 211 hours had elapsed following the start of the verification experiment, the vacuum valve was opened and the deuterium gas started to be circulated.

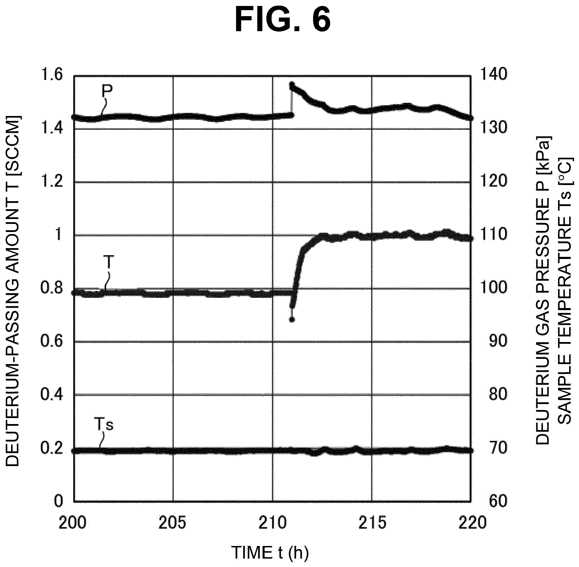

FIG. 6 shows a result of the verification experiment. In this figure, the first vertical axis on the left side shows the deuterium-passing amount T [SCCM] (Standard Cubic Centimeter per Minutes), the second vertical axis on the right side shows the deuterium gas pressure P [kPa] and the sample temperature Ts [°C], and the horizontal axis shows the time t [h]. This figure shows results obtained before and after the deuterium gas started to be circulated. From FIG. 6, it was confirmed that the deuterium-passing amount T was 0.8 [SCCM] before the deuterium gas started to be circulated, and increased to 1 [SCCM] after the deuterium gas started to be circulated. Also, it was confirmed that the deuterium-passing amount T was maintained at 1 [SCCM] after the deuterium gas started to be circulated. It could be confirmed that the sample temperature Ts was maintained to be constant, by control of the temperature control unit, before and after the deuterium gas started to be circulated. It was confirmed that the deuterium gas pressure P temporarily rose by the pressure of the circulation pump immediately after the deuterium gas started to be circulated, but was gradually returned to the original pressure. From the fact that the pressure within the second chamber was set to be constant, it could be confirmed that the pressure differential between both sides of the sample was maintained to be almost constant before and after the deuterium gas started to be circulated. From the fact that the deuterium-passing amount increased in a state the sample temperature and the pressure differential between both sides of the sample were maintained to be constant, it is believed that the impurities were removed from the sample surface, and the surface state of the sample became better. This shows that the impurity removal effect of the filter 43 is exhibited. It can be considered that examples of impurities inhibiting adsorption and dissociation of hydrogen molecules on and from the sample surface include water (steam), hydrocarbon, C, S, and Si. It can be considered that the water was discharged from the inner walls of the chamber and pipe, or was obtained by reducing the oxide layer contained in the member in the chamber by hydrogen. It can be considered that the hydrocarbon (methane, ethane, methanol, ethanol, etc.), C, S, and Si were discharged from the pipe and the member in the chamber. Therefore, it is preferable that the filter 43 adsorbs at least water (steam), hydrocarbon, C, S, and Si as impurities. As the filter 43, Fine Purer manufactured by Osaka Gas Liquid Co., Ltd and Micro Torr manufactured by Up Tech Japan Co., Ltd. may be used in addition to purifilter.

### [Second Embodiment]

In a second embodiment, the hydrogen-based gas from which impurities have been removed by the filter 43 is directly sprayed to the reactant. In the second embodiment, the same members as those in the heat generating system 1 of the first embodiment will be denoted with the same reference characters, and description thereof will be omitted.

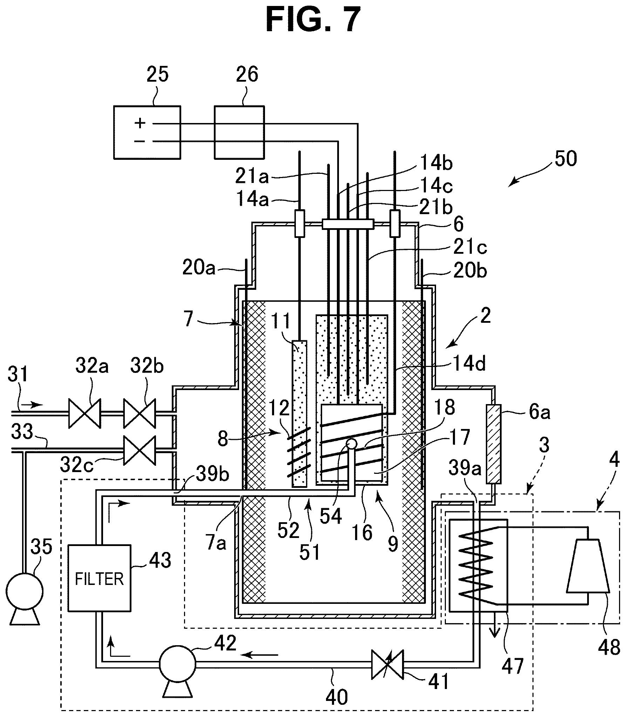

As illustrated in FIG. 7, a heat generating system 50 includes a nozzle unit 51 in addition to each member in the heat generating system 1 of the first embodiment. The heat generating system 50 further includes the wound type reactant 9 in which the thin wire 18 is wound around a set of the electrode unit 16 and the heater 17.

The nozzle unit 51 is provided between the circulation device 3 and the wound type reactant 9, and supplies the hydrogen-based gas after impurities are removed through the filter 43 into the surface of the wound type reactant 9. Specifically, the nozzle unit 51 is provided between the discharge port 39b and the wound type reactant 9, and injects, from a distal end of the nozzle unit 51, the hydrogen-based gas discharged from the discharge port 39b after impurities are removed, thereby spraying on the surface of the wound type reactant 9.

The nozzle unit 51 includes a pipe part 52 and an injection part 54. The pipe part 52 is drawn out from the discharge port 39b to the wound type reactant 9. In the present embodiment, a through-hole 7a is formed in a side surface of the reactant 7 which faces the inner wall of the container 6, and the pipe part 52 passes through this through-hole 7a. A proximal end of the pipe part 52 is connected to the discharge port 39b. A distal end of the pipe part 52 is connected to the injection part 54. The distal end of the pipe part 52 is arranged at a position corresponding to a center in a width direction of the wound type reactant 9. The pipe part 52 guides, to the injection part 54, the hydrogen-based gas discharged from the discharge port 39b after impurities are removed.

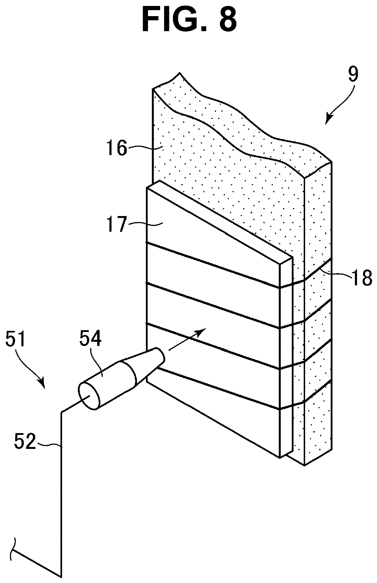

As illustrated in FIG. 8, the injection part 54 is provided at the distal end of the pipe part 52. The injection part 54 is connected to the discharge port 39b through the pipe part 52. The distal end of the injection part 54 faces the surface on the heater 17 side (front side) of the wound type reactant 9. The hydrogen-based gas guided from the pipe part 52 after impurities are removed is injected from the distal end of the injection part 54. Thereby, the hydrogen-based gas injected from the injection part 54 after impurities are removed is supplied to the surface of the wound type reactant 9. A distance between the distal end of the injection part 54 and the surface of the wound type reactant 9 is, for example, 1 to 2 cm, and is 1 cm in the present embodiment. An orientation of the distal end of the injection part 54 may be appropriately designed, but it is preferable to be designed so that the hydrogen-based gas discharged from the distal end of the injection part 54 after impurities are removed is sprayed on the entire surface on the front side of the wound type reactant 9. In the present embodiment, the distal end of the injection part 54 is oriented perpendicular to a direction of the surface on the front side of the wound type reactant 9.

In the above configuration, the heat generating system 50 is provided with the nozzle unit 51 which is drawn out from the discharge port 39b to the wound type reactant 9 and injects the hydrogen-based gas discharged from the discharge port 39b after impurities are removed, whereby the hydrogen-based gas after impurities are removed is directly sprayed on the surface of the wound type reactant 9. Thereby, in the heat generating system 50, the fresh hydrogen-based gas obtained by removing impurities through the filter 43 is directly supplied to the wound type reactant 9, and impurities on and around the surface of the wound type reactant 9 are blown off, so that the wound type reactant 9 is placed under an atmosphere formed by the hydrogen-based gas after impurities are removed, whereby the excess heat output is reliably increased and/or maintained.

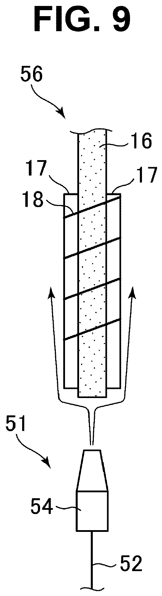

The arrangement of the nozzle unit 51 may be appropriately changed. For example, as illustrated in FIG. 9, the nozzle unit 51 may be arranged below a wound type reactant 56 in a state in which the distal end of the injection part 54 faces upward. The wound type reactant 56 has a structure in which the electrode unit 16 is sandwiched between two heaters 17 and the thin wire

18 is wound around a set of the electrode unit 16 and two heaters 17. This figure is a diagram of the wound type reactant 56 when seen from the lateral side. The hydrogen-based gas injected from the distal end of the injection part 54 after the impurities are removed is sprayed to a lower end portion of the wound type reactant 56 and branches off, and then flows toward the front surface and the back surface of the wound type reactant 56. Thereby, the hydrogen-based gas after impurities are removed is supplied to the entire surface of the wound type reactant 56. It is preferable that the injection part 54 is arranged at a position corresponding to a center in a thickness direction of the wound type reactant 56. Note that when the nozzle unit 51 sprays the hydrogen-based gas after impurities are removed to the wound type reactant 8, the nozzle unit 51 may be arranged below the wound type reactant 8 in a state in which the distal end of the injection part 54 faces upward.

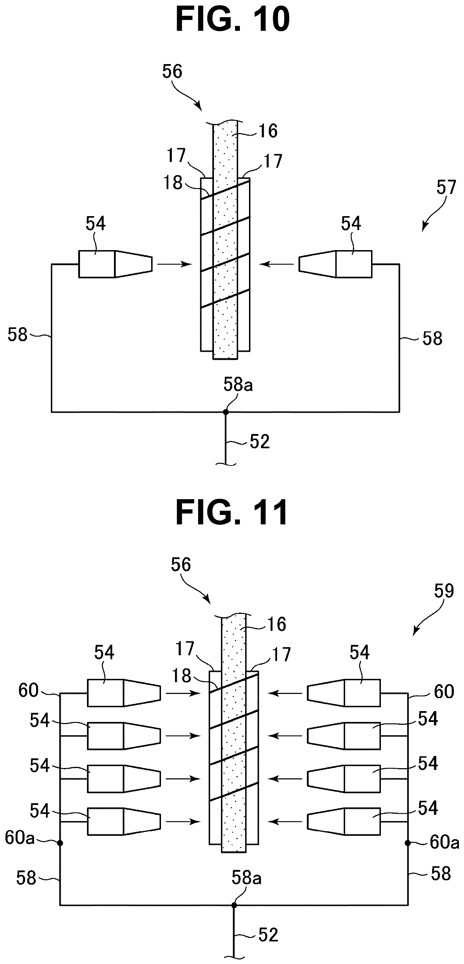

As illustrated in FIG. 10, a nozzle unit 57 having distal ends provided in a manner to branch off may be used instead of the nozzle unit 51. In this example, the nozzle unit 57 has two injection parts 54. The two injection parts 54 are arranged so that the respective distal ends face each other. The wound type reactant 56 is provided between the two injection parts 54. The distal ends of the injection parts 54 face the front surface and the back surface of the wound type reactant 56, respectively. The nozzle unit 57 includes a branch pipe 58 between the pipe part 52 and the injection parts 54. The proximal end of the branch pipe 58 is provided with a connection portion 58a connecting with the pipe part 52. The distal end of the branch pipe 58 branches into two so that each distal end is connected to the injection part 54. This nozzle unit 57 allows the hydrogen-based gas injected from each injection part 54 after impurities are removed to be reliably sprayed to the entire surface of the wound type reactant 56. Note that the number of branching of the branch pipe 58 may be appropriately designed.

As illustrated in FIG. 11, a nozzle unit 59 having a plurality of injection parts 54 arrayed to face toward the surface of the wound type reactant 56 may be used. In the nozzle unit 59, the distal ends of the branch pipe 58 each are provided with a nozzle header 60 having the plurality of injection parts 54. In this example, the four injection parts 54 are arrayed in one nozzle header 60. The proximal end of the nozzle header 60 is provided with a connection portion 60a connecting with the branch pipe 58. The nozzle header 60 guides the hydrogen-based gas from the branch pipe 58 after impurities are removed to the injection parts 54. This nozzle unit 59 allows the hydrogen-based gas injected from each injection part 54 after impurities are removed to be uniformly supplied to the entire surface of the wound type reactant 56. Note that the number of nozzle headers 60 and the number of injection parts 54 may be appropriately designed.

### [Third Embodiment]

In the third embodiment, the hydrogen-based gas in the container 6 is sampled, the sampled hydrogen-based gas is analyzed, and the circulation flow rate of the hydrogen-based gas is controlled using the analysis result.

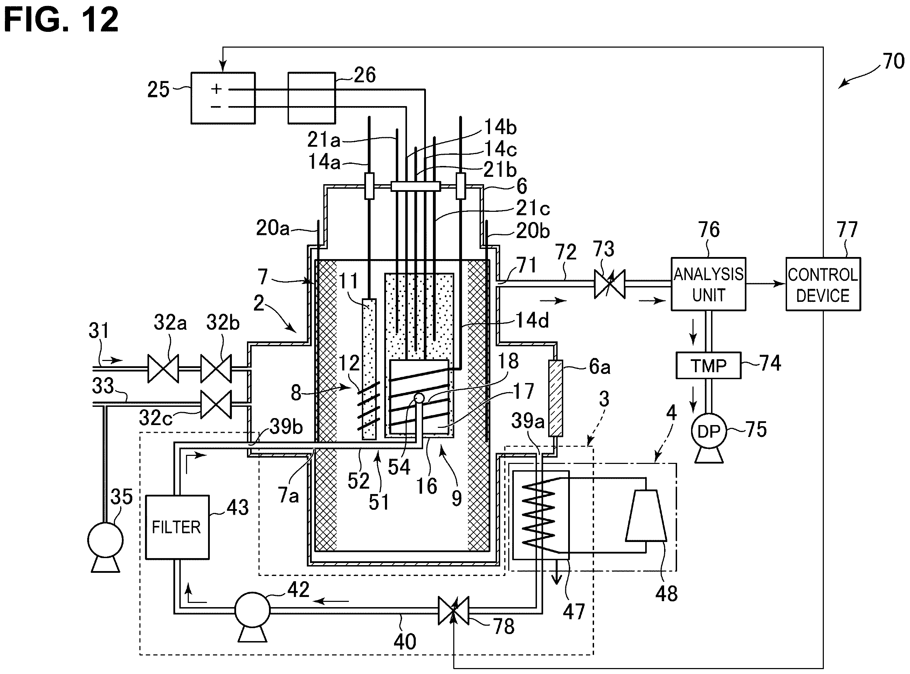

As illustrated in FIG. 12, a heat generating system 70 includes a sampling pipe 72, regulating valve 73, a TMP 74, a DP75, an analysis unit 76, and a control device 77 in addition to each member of the heat generating system 50 of the second embodiment. The heat generating system 70 further includes a flow rate control unit 78 instead of the flow rate control unit 41. In the third embodiment, the same members as those in the heat generating system 50 will be denoted with the same reference characters, and description thereof will be omitted.

The sampling pipe 72 is connected with a recovery port 71 formed in the container 6. The hydrogen-based gas flows into the sampling pipe 72 from the interior of the container 6 through the recovery port 71. The sampling pipe 72 is provided with a regulating valve 73, the analysis unit 76, the TMP 74, and the DP 75 in this order from the side connecting with the container 6. The regulating valve 73 controls a flow rate of the hydrogen-based gas flowing into the sampling pipe 72. The TMP 74 and the DP 75 exhaust gas in the sampling pipe 72 so that the hydrogen-based gas in the container 6 flows into the sampling pipe 72.

The analysis unit 76 analyzes the hydrogen-based gas which has flowed into the sampling pipe 72. The analysis unit 76 analyzes an inhibitor contained in the hydrogen-based gas, for example. The inhibitor is gas inhibiting the heat generation reaction of the heat-generating element cell 2 (hereinafter referred to as "inhibiting gas"), and examples of the inhibiting gas include water (steam) and hydrocarbon. As the analysis unit 76, a mass spectrometer is used, for example, and in the present embodiment, a quadrupole type mass spectrometer is used. The analysis unit 76 performs the mass spectrometry of the inhibiting gas, and outputs, for example, ionic current of the inhibiting gas or gas partial pressure as a result of mass spectrometry. The analysis unit 76 outputs the result of mass spectrometry to the control device 77. In the present embodiment, the analysis unit 76 periodically performs the mass spectrometry. The timing at which the mass spectrometry is performed by the analysis unit 76 can be set and changed by the control device 77.

The control device 77 outputs a circulation flow rate control signal for controlling the circulation flow rate of the hydrogen-based gas, and a heating temperature control signal for controlling the heating temperature of the heater 17, in accordance with the result of the mass spectrometry obtained from the analysis unit 76.

The flow rate control unit 78 controls the circulation flow rate of the hydrogen-based gas based on the circulation flow rate control signal output from the control device 77. The flow rate control unit 78 increases or decreases the circulation flow rate of the hydrogen-based gas in accordance with the ion current of the inhibiting gas, for example. When the circulation flow rate of the hydrogen-based gas is increased or decreased, the excess heat output and the temperature in the container 6 are adjusted. That is, the flow rate control unit 78 controls the circulation flow rate of the hydrogen-based gas in accordance with the analysis result obtained from the analysis unit 76, thereby adjusting the excess heat output and the temperature in the container 6. When the circulation flow rate is controlled in accordance with the analysis result, the inhibiting gas is reliably discharged from the interior of the container 6 and the hydrogen-based gas after impurities are removed is returned to the interior of the container 6, whereby the interior of the container 6 can be kept clean.

The heating power source 25 controls the heating temperature of the heater 17 based on the heating temperature control signal output from the control device 77. That is, the heating power source 25 controls the heating temperature of the heater 17 in accordance with the analysis result by the analysis unit 76. The heating power source 25 raises the heating temperature of the heater 17 to restrain the temperature drops in the container 6 associated with the increase in the circulation flow rate of the hydrogen-based gas. The heating power source 25 pre-stores the relationship of correspondence between the ion current of the inhibiting gas and the output setting value of the heater 17, for example, and adjusts the output of the heater 17 using the output setting value corresponding to the ion current obtained by the analysis unit 76. Thereby, the temperature for maintaining the heat generation reaction of the heat-generating element cell 2 can be reliably maintained.

In the above configuration, the heat generating system 70 performs the mass spectrometry of the inhibiting gas contained in the hydrogen-based gas sampled from the interior of the container 6, and feeds back the analysis result to the control of the circulation flow rate of the hydrogen-based gas and the control of the heating temperature of the heater 17. Thereby, in the heat generating system 70, the interior of the container 6 can be kept clean, and the temperature for maintaining the heat generation reaction can be reliably maintained, whereby the excess heat output can be reliably increased and/or maintained.

The analysis unit 76 performs the mass spectrometry of the adsorbent impurity gas contained in the hydrogen-based gas instead of performing the mass spectrometry of the inhibiting gas, and outputs the analysis result to the control device 77. The analysis unit 76 outputs, for example, the concentration of the impurity gas as the analysis result. In this case, when the concentration of the impurity gas is lower, the flow rate control unit 78 increases the circulation flow rate of the hydrogen-based gas. Also, when the concentration of the impurity gas is lower, the heating power source 25 increases the heating temperature of the heater 17.

The control device 77 may output the heating temperature control signal in accordance with the measurement temperatures measured by the temperature measurement units 20a, 20b, 21a, 21b, 21c. In this case, when the measurement temperatures are lower, the heating power source 25 increases the heating temperature of the heater 17. That is, the heating power source 25 may control the heating temperature of the heater 17 in accordance with the measurement temperatures measured by the temperature measurement units 20a, 20b, 21a, 21b, 21c.

The heat generating system 1 of the first embodiment may be provided with the sampling pipe 72, the regulating valve 73, the TMP74, the DP 75, the analysis unit 76, and the control device 77.

The discharge port 39b may be provided in a bottom portion of the container 6 instead of being provided in the side wall of the container 6. When the discharge port 39b is provided in the bottom portion of the container 6, it is preferable that the recovery port 39a is provided in an upper portion of the container 6. Thereby, the hydrogen-based gas discharged from the discharge port 39b after impurities are removed flows in areas in which the wound type reactants are arranged, and is recovered by the recovery port 39a. Also, when the discharge port 39b is provided in the bottom portion of the container 6, it is preferable that the pipe part 52 passes through the opening in the bottom portion of the cylindrical reactant 7 without forming the through-hole 7a in the reactant 7.

### Reference Signs List

1, 50, 70 Heat generating system
2 Heat-generating element cell
3 Circulation device
4 Heat recovery device
6 Container
7 Reactant
8, 9, 56 Wound type reactant
12, 18 Thin wire
17 Heater
20a, 20b, 21a, 21b, 21c Temperature measurement unit
40 Circulating passage
41, 78 Flow rate control unit
42 Pump
43 Filter
51, 57, 59 Nozzle unit
54 Injection part
76 Analysis unit

## Claims

1. A heat generating system, comprising:
a heat-generating element cell including:
a container having a recovery port and a discharge port; and
a reactant that is provided in the container, is made from a hydrogen storage metal or a hydrogen storage alloy, has a plurality of metal nanoparticles provided on a surface of the reactant,
the heat-generating element cell generating excess heat when hydrogen-based gas contributing to heat generation is supplied into the container and hydrogen atoms are occluded in the plurality of metal nanoparticles; and
a circulation device configured to circulate the hydrogen-based gas in the heat-generating element cell, the circulation device including:
a circulating passage that is provided outside the container and connects the recovery port to the discharge port;
a pump configured to circulate the hydrogen-based gas in the container via the circulating passage; and
a filter provided on the circulating passage and configured to absorb and remove impurities in the hydrogen-based gas.

2. The heat generating system according to the claim 1, further comprising a heat recovery device provided on the circulating passage and configured to recover heat from the hydrogen-based gas heated by the excess heat by the heat-generating element cell.

3. The heat generating system according to the claim 1 or 2, wherein the filter is configured to absorb, as the impurities, at least water, hydrocarbon, C, S, and Si.

4. The heat generating system according to any one of claims 1 to 3, further comprising a nozzle unit provided between the discharge port and the reactant, and configured to supply the hydrogen-based gas after removing the impurities through the filter to the surface of the reactant.

5. The heat generating system according to claim 4, wherein the nozzle unit is configured to supply the hydrogen-based gas after removing the impurities to the entire surface of the reactant.

6. The heat generating system according to claim 5, wherein the nozzle unit includes a plurality of injection parts arranged in a surface direction of the surface of the reactant, wherein
the hydrogen-based gas after removing the impurities is configured to be supplied from the plurality of injection parts to the entire surface of the reactant.

7. The heat generating system according to any one of claims 1 to 6, wherein the circulation device further includes a flow rate control unit configured to control a circulation flow rate of the hydrogen-based gas.

8. The heat generating system according to claim 7, further comprising a temperature measurement unit provided in the container, wherein
the flow rate control unit is configured to perform output adjustment of the excess heat and temperature adjustment in the container by controlling the circulation flow rate of the hydrogen-based gas in accordance with a measured temperature by the temperature measurement unit.

9. The heat generating system according to claim 7, further comprising an analysis unit configured to analyze the hydrogen-based gas in the container, wherein
the flow rate control unit is configured to perform output adjustment of the excess heat and temperature adjustment in the container by controlling the circulation flow rate of the hydrogen-based gas in accordance with the an analysis result by the analysis unit.

10. The heat generating system according to claim 9, further comprising:
a heater configured to heat the reactant; and
a heating power source configured to perform control a heating temperature of the heater in accordance with the an analysis result by the analysis unit.
